# EUROPEAN PATENT SPECIFICATION

(11) **EP 1 520 750 B1**
(45) Date of publication and mention of the grant of the patent: **12.11.2008**
(21) Application number: 04077677.5
(22) Date of filing: 28.09.2004
(51) Int. Cl.: B60R 1/06

(54) **Vehicle mirror**
Kraftfahrzeugrückblickspiegel
Rétroviseur de véhicule

(30) Priority: 30.09.2003 NL 1024410
(43) Date of publication of application: 06.04.2005
(73) Proprietor: H.A.B.A. B.V., 3155 DL Maasland (NL)
(72) Inventor: Batist, Johannes Josephus Maria, 2671 JT Naaldwijk (NL)
(74) Representative: van Westenbrugge, Andries

(56) References cited:
- GB-A- 1 403 588
- PATENT ABSTRACTS OF JAPAN vol. 1997, no. 02, 28 February 1997 (1997-02-28) & JP 08 268163 A (ARAKI YOSHITOMI), 15 October 1996 (1996-10-15)
- PATENT ABSTRACTS OF JAPAN vol. 2002, no. 06, 4 June 2002 (2002-06-04) & JP 2002 036965 A (NIKI TOSHIYUKI), 6 February 2002 (2002-02-06)
- PATENT ABSTRACTS OF JAPAN vol. 2000, no. 10, 17 November 2000 (2000-11-17) & JP 2000 190780 A (INOUE SHINJI), 11 July 2000 (2000-07-11)

## Description

The present invention relates to a vehicle mirror to be fitted on a panel section of a vehicle, comprising a foot, to be fixed to said panel section of said vehicle, a mirror housing with mirror and an arm linking the foot and the mirror housing.

Such a vehicle mirror is generally known in the art and is intended in particular for subsequent fitting to a vehicle. After all, there are fixings designed by the manufacturer for conventional rear view mirrors. However, it is often necessary to fit further mirrors at a later stage. Examples of these are mirrors fitted to the rear of a vehicle to be able to observe the region immediately behind the vehicle, blind spot mirrors and other mirrors that make the region around the vehicle visible to the driver. As a result of the change of government regulations, subsequent fitting of such mirrors is very common.

When fitting such mirrors it is generally not desired that holes are made in the vehicle. Moreover, in some situations this is not possible (windows). On the other hand it is desirable to provide a firm, stable fixing, where simple assembly is moreover possible. In the art there is the problem that once a mirror has been fixed to a part of the vehicle it can be found that this fixing is incorrect when adjusting the mirror. In practice, the fixing is then undone and correct fixing of the foot is then realised in another position. As a result there is damage to the vehicle and the effectiveness of the fixing decreases.

A foot that consists of a top part to be fixed to a plate is disclosed in GB 1 403 588. Turning with respect to one another is not possible here. This can be achieved only by turning the arm relative to the casting.

JP 08268163 discloses a mirror where the foot is fixed to the bodywork via an adhesive material. Turning is no longer possible after fixing.

The aim of the present invention is to avoid these disadvantages and appreciably to simplify the fixing of a vehicle mirror to be fitted on a vehicle.

This aim is realised with a vehicle mirror as described above in that said foot comprises two foot parts, a first part joined to said arm and a second part, provided with fixing means for fixing to said panel section, wherein said first and second foot part are provided with interacting engagement means, as a result of which said first and second part can be secured in different angular positions with respect to one another.

According to the present invention the second foot part is first fixed to the vehicle in some way or other. This fixing is a definitive fixing. After all, the first foot part can be fastened to the second foot part in various angular positions with respect thereto. That is to say if it is found when combining the foot parts that the mirror does not display the correct region it is then not necessary to undo the fixing to the vehicle but only the fixing between the foot parts. These foot parts are preferably made circular. More particularly, the second foot part, which is fixed to the vehicle, has a relatively large diameter so that a large supporting surface on the vehicle is obtained. Fixing to the vehicle can take place in any way known in the art. According to an advantageous embodiment, however, use is made of an adhesive layer, which moreover has some give. Such an adhesive layer can, for example, be realised by double-sided adhesive tape. This adheres on one side to the second foot part and before use the protective strip can be removed from the adhesive tape and simple fixing to, for example, a vehicle window or panel can thus be achieved. As indicated above, this fixing is one-off, so that the problem of adhesion decreasing on repeated fixing does not arise.

Because both the mirror housing and the foot are fitted such that they can be moved with respect to the arm, a certain degree of adjustment is thus possible. Therefore it has proved adequate for the first and second foot part to be secured in a number of discrete positions with respect to one another. A particularly stable and simple fixing of the first and second foot part can be obtained by this means. Such discrete positions can be obtained by means of a ridge/groove mechanism or a mechanism with serrations engaging in one another.

In order to provide a stable assembly, these serrations are as far as possible at the periphery of both the first and the second foot part. If the serrations arranged on, preferably, the first foot part have resilient lips, slight deflections can be absorbed without any problem.

The distance between opposing serrations on the resilient lips is preferably 5 - 15 cm.

The invention will be explained in more detail below with reference to an illustrative embodiment shown in the drawings. In the drawings:
Fig. 1 shows, diagrammatically, a vehicle mirror according to the invention fitted on the rear of a vehicle;
Fig. 2 shows the two foot sections in a first perspective view; and
Fig. 3 shows the two foot sections according to the invention in a second perspective view.

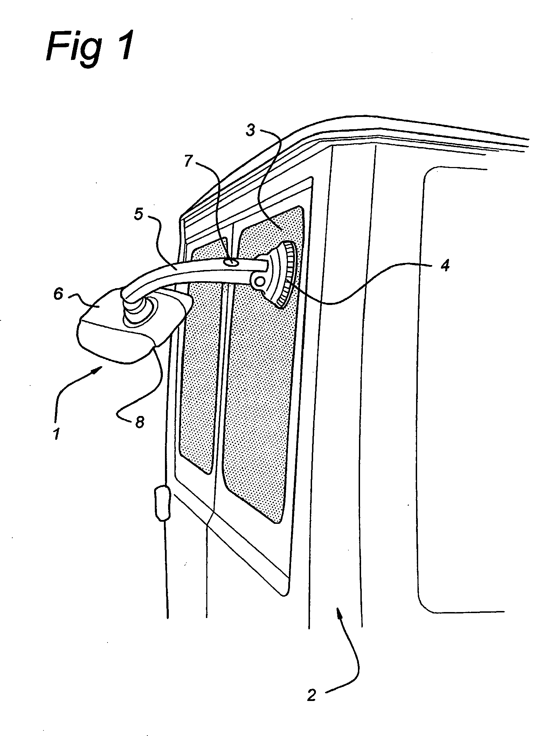

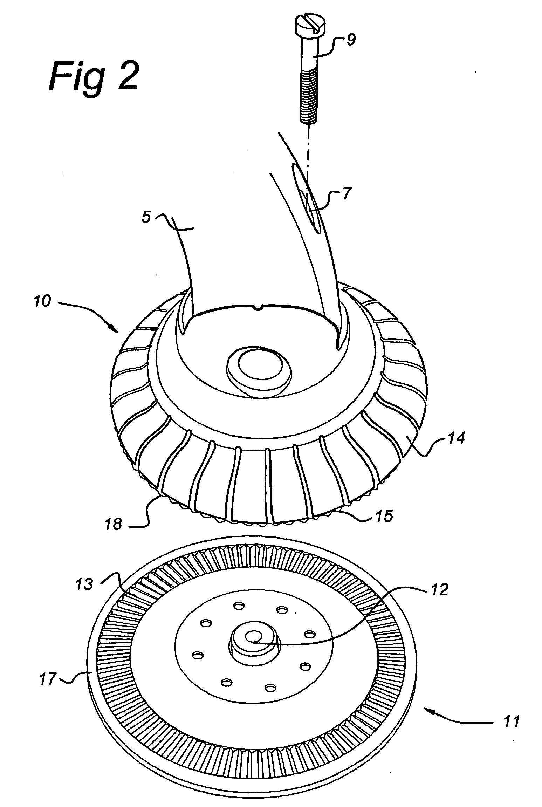

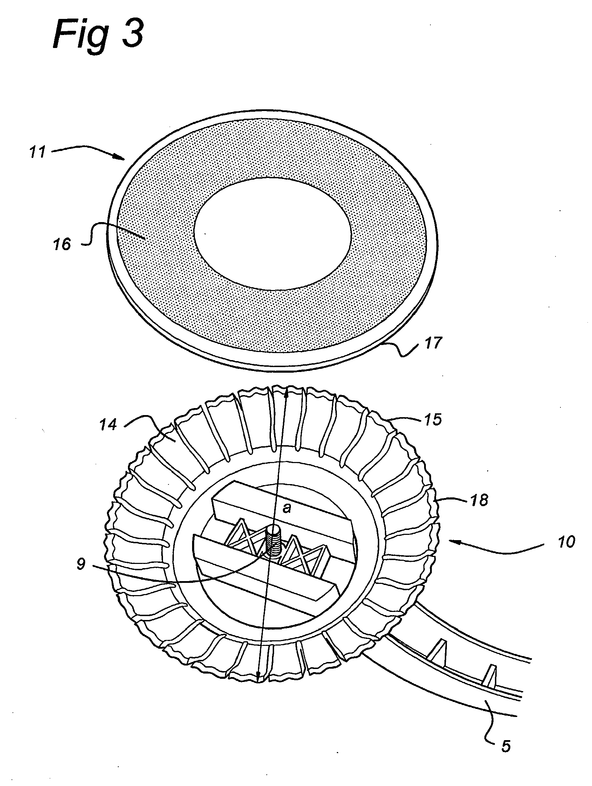

In Fig. 1 the vehicle mirror according to the present invention is indicated in its entirety by 1. This mirror is fitted on the rear of a vehicle 2 and more particularly on the rear window of a door thereof. The mirror 1 consists of a mirror housing 6 in which a mirror 8 is accommodated. This mirror can be any mirror known in the state of the art (flat, convex, and the like). Mirror housing 6 is joined to mirror arm 5 via a pivot joint that is not shown in detail. Mirror arm 5 is joined to foot 4, again in a pivotable manner. It can be seen from Figs 2 and 3 that foot 4 consists of a first foot part 10 and a second foot part 11. Arm 5 is joined to the first foot part 10. Furthermore, an opening 7 has been made in arm 5 for inserting a bolt 9 therein. The second foot part 11, which is preferably somewhat flexible, is provided with a bush with corresponding screw thread, so that bolt 9 is able to join the first foot part 10 to the second foot part 11. In the fitted position, the head of bolt 9 is, of course, below the underside of arm 5, so that the pivoting movement thereof is not impeded by bolt 9.

It can be seen from Fig. 2 that the first, preferably rigid, foot part 10 is provided with a number of peripheral lips 14. It can be seen from Fig. 3 that each lip 14 is provided with serrations 18. Both the first and second foot part are circular and the distance between the opposing serrations 15 is indicated by a in Fig. 3 and is approximately 7 cm.

The second foot part 11 is provided with a raised rim 17, within which serrations 13 are arranged (Fig. 2). On the rear the second foot part 11 is provided with a ring of double-sided adhesive tape 16, provided with a covering strip that is not shown in more detail (Fig. 3).

The mirror described above is fitted as follows. Before fitting the first and second foot part are separated. The strip is removed from the adhesive tape 16 on the second foot part 11. The relevant surface of the vehicle where the mirror has to be fitted is cleaned and the second foot part is then stuck to the part of the vehicle in the desired position. The "rotational setting" of this position is of minor importance. The first foot part 10 together with the other part of the mirror is then positioned. During this positioning the ends of the resilient lips 14 drop inside the raised rim 17. By tightening bolt 9 in bush 12, securing of the two foot parts 10 and 11 such that they cannot be turned can be obtained. If it is subsequently found that the mirror cannot be adjusted properly, bolt 9 can then easily be undone and a better mutual positioning between the foot parts 10 and 11 can be provided.

Although the invention has been described above with reference to a preferred embodiment, it will be understood that numerous modifications can be made thereto without going beyond the scope of the present application. For instance, it is possible for the foot parts to have a different shape and for the mutual engagement to be implemented in any other manner known per se in the state of the art. These and further modifications fall within the scope of the present application.

## Claims

1. Vehicle mirror (1) to be fitted on a panel section (3) of a vehicle (2), comprising a foot (4), to be fixed to said panel section of said vehicle, a mirror housing (6) with mirror (8) and an arm (5) linking the foot and the mirror housing, **characterised in that** said foot comprises two foot parts (10, 11), a first part (10) joined to said arm (5) and a second part (11), provided with fixing means (16) for fixing to said panel section, wherein said first and second foot part are provided with interacting engagement means (13, 15), as a result of which said first and second part can be secured in different angular positions with respect to one another.

2. Vehicle mirror according to Claim 1, wherein said positions are discrete positions.

3. Vehicle mirror according to one of the preceding claims, wherein said engagement means comprise serrations (13, 18).

4. Vehicle mirror according to Claim 3, wherein said serrations are arranged on peripheral lips (14).

5. Vehicle mirror according to Claim 4, wherein said peripheral lips are resilient lips.

6. Vehicle mirror according to Claim 4 or 5, wherein the effective ends of said lips are a distance (a) of at least 5 cm apart.

7. Vehicle mirror according to Claim 6, wherein said second foot part is provided with an adhesive layer (16) with give.

8. Vehicle mirror according to Claim 7, wherein said adhesive layer is a double-sided adhesive tape.

## Patentansprüche

1. Fahrzeugspiegel (1), der auf einem Plattenbereich (3) eines Fahrzeugs (2) angebracht werden soll, und der einen Fuß (4) zum Befestigen an dem Plattenbereich des Fahrzeugs, ein Spiegelgehäuse (6) mit einem Spiegel (8) und einem Arm (5) umfasst, der den Fuß und das Gehäuse miteinander verbindet,
**dadurch gekennzeichnet, dass**
der Fuß zwei Fußteile (10,11) umfasst, einen ersten Teil (10), der mit dem Arm (5) verbunden ist, und einen zweiten Teil (11), der mit Befestigungsmitteln (16) zum Befestigen an dem Plattenbereich versehen ist, wobei der erste und der zweite Fußteil mit zusammenwirkenden Eingriffsmitteln (13, 15) versehen sind, wodurch der erste und zweite Teil in unterschiedlichen Winkelpositionen in Bezug aufeinander fixiert werden können.

2. Fahrzeugspiegel nach Anspruch 1, bei dem die Positionen eigenständige Positionen sind.

3. Fahrzeugspiegel nach einem der vorhergehenden Ansprüchen, bei dem die Eingriffsmittel Rippen (13, 18) umfassen.

4. Fahrzeugspiegel nach Anspruch 3, bei dem die Rippen an den umlaufenden Rändern (14) angeordnet sind.

5. Fahrzeugspiegel nach Anspruch 4, bei dem die umlaufenden Ränder elastische Ränder sind.

6. Fahrzeugspiegel nach einem der Ansprüchen 4 oder 5, bei dem die effektiven Enden der Ränder eine Entfernung (a) von zumindest 5 cm auseinander sind.

7. Fahrzeugspiegel nach Anspruch 6, bei dem der zweite Fußteil mit einer Haftschicht (16) mit Spiel versehen ist.

8. Fahrzeugspiegel nach Anspruch 7, bei dem die Haftschicht ein doppelseitiges Klebeband ist.

## Revendications

1. Rétroviseur de véhicule (1) à adapter sur une section de panneau (3) d'un véhicule (2), comprenant une patte (4) à fixer à ladite section de panneau dudit véhicule, un boîtier de rétroviseur (6) avec un miroir (8) et un bras (5) reliant la patte et le boîtier de rétroviseur, **caractérisé en ce que** ladite patte comprend deux parties de patte (10, 11), une première partie (10) reliée audit bras (5) et une seconde partie (11) munie de moyens de fixation (16) pour une fixation à ladite section de panneau, dans lequel lesdites première et seconde parties de patte sont munies de moyens d'engagement interdépendants (13, 15) en conséquence de quoi lesdites première et seconde parties peuvent être fixés dans diverses positions angulaires l'une par rapport à l'autre.

2. Rétroviseur de véhicule selon la revendication 1, dans lequel lesdites positions sont des positions discrètes.

3. Rétroviseur de véhicule selon l'une quelconque des revendications précédentes, dans lequel lesdits moyens d'engagement comprennent des cannelures (13, 18).

4. Rétroviseur de véhicule selon la revendication 3, dans lequel lesdites cannelures sont agencées sur des lèvres périphériques (14).

5. Rétroviseur de véhicule selon la revendication 4, dans lequel lesdites lèvres périphériques sont des lèvres élastiques.

6. Rétroviseur de véhicule selon la revendication 4 ou 5, dans lequel les extrémités efficaces desdites lèvres sont séparées par une distance (5) d'au moins 5 cm.

7. Rétroviseur de véhicule selon la revendication 6, dans lequel la seconde partie de patte est munie d'une couche adhésive (16) avec dégagement.

8. Rétroviseur de véhicule selon la revendication 7, dans lequel ladite couche adhésive est une bande adhésive double face.
